Europäisches Patentamt

European Patent Office

Office européen des brevets

(11) Publication number: **0 521 576 A1**

## EUROPEAN PATENT APPLICATION

(21) Application number: **92201973.2**

(22) Date of filing: **30.06.92**

(51) Int. Cl.5: **H02J 3/46**

(30) Priority: **01.07.91 NL 9101144**

(43) Date of publication of application:
**07.01.93 Bulletin 93/01**

(84) Designated Contracting States:
**AT BE CH DE DK ES FR GB GR IT LI LU MC NL PT SE**

(71) Applicant: **HOLEC SYSTEMEN EN COMPONENTEN B.V.**
**Bornsestraat 5**
**NL-7556 BH Hengelo(NL)**

(72) Inventor: **Bouwknegt, Koos**
**Rumkehof 28**
**NL-7555 NM Hengelo(NL)**

(74) Representative: **de Bruijn, Leendert C. et al**
**Nederlandsch Octrooibureau**
**Scheveningseweg 82 P.O. Box 29720**
**NL-2502 LS Den Haag(NL)**

(54) **Circuit for measuring the current distribution in parallel-operating alternating-voltage sources.**

(57) A circuit for measuring the current distribution in the case of parallel-operating alternating-voltage sources, in which each alternating-voltage source is provided with a current transformer and a first resistor connected to an output terminal thereof. The other output terminal of the first resistor is connected to a circuit point which is common for all the alternating-voltage sources. The output terminals, not connected to the first resistor, of the current transformers of the alternating-voltage sources are connected to one another and to one side of a parallel circuit of a number of second resistors. This number corresponds to the number of parallel-operating alternating-voltage sources. The current delivered by an alternating-voltage source is fed to the input of the current transformer associated therewith, as a result of which the sum of the two terminal voltages of each current transformer is a measure of the current which the alternating-voltage source associated therewith delivers, this being more or less than a predetermined share of the total load current.

Rank Xerox (UK) Business Services

The invention relates to a circuit for measuring the current distribution of parallel-operating alternating-voltage sources, in which each alternating-voltage source is provided, in at least one phase, with a current transformer and a first resistor connected to an output terminal thereof. Such a circuit is disclosed by European Patent Application 0 014 415.

Said European patent application describes a system of parallel-operating direct-voltage sources, in which the load is distributed as equally as possible over the number of parallel-operating alternating-voltage sources. For this purpose, it is necessary to measure in each source how much more or less than a predetermined share of the total load current it delivers, preferably a share which is proportional to the type power of the alternating-voltage source concerned. Using the measured value as a control quantity, the amplitude and phase can be adjusted in the source so that the control quantity becomes as near zero as possible. As a consequence of this, the alternating-voltage source delivers the predetermined share, associated therewith, of the total load current.

In the known system, information about the total load current is supplied in parallel to each source of the system. Said information can be obtained in a conventional manner by incorporating, in the load connection, a current transformer which is terminated by a resistor on the secondary side. In each alternating-voltage source there is a circuit which derives, from the voltage appearing across said resistor, a signal which is a measure of the current which the source concerned has to deliver for the load current which arises. The actual current from the alternating-voltage source can also be measured by means of a current transformer, which current is subtracted from the derived signal so that each source knows how much more or less than a predetermined part, associated thereto, of the total load current it is delivering.

The known system has the disadvantage that a common component is necessary, namely the central total-current transformer incorporated in the load connection, which implies a failure risk, if for example the latter operates without termination.

In addition, if one total-current transformer is used, there is only one load connection point and the system cannot be split into subsystems, each having one or more sources and loads.

Finally, the total-current transformer of the known system will be of a larger design than that which is used for each source, and this has the disadvantage that a difference, particularly in the magnetisation current, between those designs produces a measurement error.

The object of the invention is to provide a circuit of the type mentioned at the outset in which the abovementioned disadvantages are avoided.

According to the invention this object is achieved in that the other connecting terminal of the first resistor is connected to a circuit point which is common for all the alternating-voltage sources and in that the output terminals, not connected to the first resistor, of the current transformers of the alternating-voltage sources are connected to one another and to one side of a parallel circuit of a number of second resistors, which number corresponds to the number of parallel-operating alternating voltage sources, the current delivered by an alternating-voltage source being fed in each case to the input of the current transformer associated therewith and the sum of the terminal voltages of said current transformer with respect to the common circuit point being a measure of the current, delivered by the alternating-voltage source associated therewith, which is more or less than a predetermined share of the total load current.

Preferably, the values of the second resistors are inversely proportional to the type powers of the sources. This results in a measure of the current, delivered by the source, which is more or less than a share of the total load current which is proportional to its type power.

If the first and second resistance are equal to one another in each alternating-voltage source, the voltages across the current transformers will be equal to zero if the load distribution over the system of alternating-voltage sources is proportional to the respective type powers.

In an embodiment according to the invention, the output terminal, connected to the first resistor of the current transformer is connected to the input of an amplifier via a third resistor and the output terminal connected to the second resistor is connected to said input via a fourth resistor. In certain cases, it may be advantageous for the amplifier to have an isolating function.

In a particularly advantageous embodiment, the second resistors are inversely proportional to the type powers of the sources and the ratio of the values of the first and second resistors is equal to the ratio of the values of the third and fourth resistors. For the sake of simplicity, the ratios may be chosen as equal to one. This does not need to be the same ratio in all the sources.

If one of the alternating-voltage sources has a very low source impedance and is not controllable, such as, for example, the mains, an auxiliary switching conductor to which the output terminals, to be connected to one another, of the current transformer are connected is short-circuited.

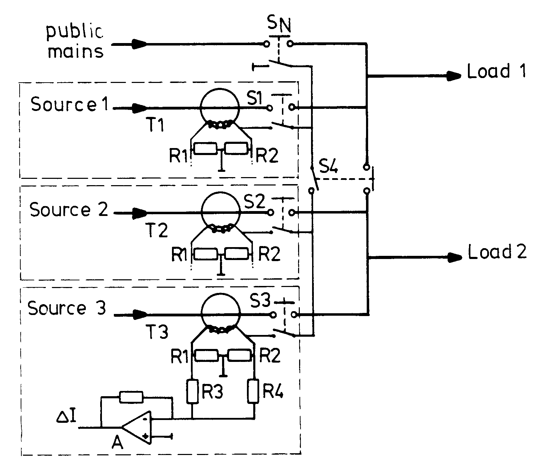

The invention will be explained in greater detail below by reference to a circuit diagram, shown in the drawing, of an embodiment of the invention to be used by preference.

In the drawing, only three alternating-voltage sources 1, 2 and 3 are shown for the sake of clarity.

The invention is based on the insight that to obtain and maintain a certain load distribution over the parallel-operating alternating-voltage sources, it is necessary to inform each alternating-voltage source about the total load current delivered, and that it is possible to obtain this information from the sources themselves.

For this purpose, in the embodiment shown in the drawing and to be used by preference, a current transformer T1, T2, T3 whose primary side is incorporated in the internal conductor of the source concerned is present in at least one phase in each alternating-voltage source. The secondary side of the current transformer T1, T2, T3 is terminated by a series circuit of the resistors R1 and R2. The connecting point between the resistors R1 and R2 is connected to a circuit point which is common for the system of parallel-operating sources. The output terminals, connected to the resistors, of the current transformers T1, T2, T3 are connected via the lowermost contacts of the respective switches S1, S2 and S3, to an auxiliary switching conductor so that, as a result of actuating said switches belonging to the coacting sources, said output terminals of the current transformers associated therewith are connected in parallel. As a consequence of the currents delivered by the alternating-voltage sources to the inputs of the current transformers associated therewith, a voltage made up of the voltages across the resistors R1 and R2 is produced across the secondary side of each current transformer. The voltage across R1 is a measure of the current delivered by the source concerned itself, while the voltage across the parallel-connected resistor R2 is a measure of the total load current. Since the sign of the first measure is reversed with respect to that of the second measure, adding the two will be a measure of the current, delivered by the alternating voltage source concerned, which is more or less than a predetermined share of the total load current.

So that a current in the auxiliary switching conductor adds up in exactly the same way as in the main parallel rail, all the current transformers must have the same winding ratio.

According to the invention, the values of the resistors R2 are chosen as inversely proportional to the type powers of the sources, in other words P1 x (R2 of source 1) = P2 x (R2 of source 2) = P3 x (R2 of source 3), P1, P2 and P3 being the respective type powers of the alternating-voltage sources 1, 2 and 3. If the value of the resistor R1 in each source is made equal to the value of the resistor R2, the sum of the two terminal voltages of the current transformer is equal to zero if the current delivered by the alternating-voltage source 1 is equal to $P1/(P1 + P2 + P3)$ x the total load current.

The voltages across the resistors R1 and R2 in an alternating-voltage source are added by means of the amplifier A. For this purpose, the voltages across said resistors are connected to the input of the amplifier A via the resistors R3 and R4.

If the control electronics of the alternating-voltage sources need to be isolated electrically, an isolating amplifier can be chosen for the adding amplifier.

In the embodiment shown, the values of the resistors R2 are inversely proportional to the type powers of the sources and the ratio of the values of the resistors R1 and R2 is equal to the ratio of the values of the resistors R3 and R4. As a result of the last mentioned choice of ratio, the output signal of the amplifier A, which is denoted by $\Delta I$ in the drawing, is automatically equal to zero if the source concerned is not taking part in the system of parallel-operating alternating-voltage sources.

For the sake of convenience, the ratios R1/R2 and R3/R4 may be chosen as equal to 1. This does not need to be the same ratio in all the sources.

If both R2 and R4 are chosen as inversely proportional to the type power, all the resistors R1 and R3 may, if desired, remain the same.

The individual current can be read off with a voltmeter across R1 and a predetermined share of the total load current can be read off with a voltmeter across R2.

A numerical example follows for the purpose of illustration.

An alternating-voltage source having a type power of 50 kVA and an alternating-voltage source having a type power of 100 kVA are connected in parallel. Both sources are provided with 100:1 current transformers, said current transformer being terminated in the source having the type power of 50 KVA with the resistors $R1 = R2 = 2\Omega$ and the current transformer of the alternating-voltage source of 100 kVA is terminated with the resistors $R1 = R2 = 1\Omega$. In both sources, the resistors R3 and R4 are equal to one another.

If the total load current is 99 A, a current of 1 A flows through the two parallel-connected resistors R2, with the result that there is a voltage of 0.66 volt across them. $\Delta I$ will be zero for the alternating-voltage source having the type power of 50 kVA if this source contributes 33 A. $\Delta I$ will be zero for the 100 kVA alternating-voltage source if said source contributes 66 A. A load distribution which is proportional to the respective type powers is therefore produced across the system.

The advantage of the circuit according to the invention is that it is only necessary to use local current transformers.

Because one type of current transformer can be used, leakage and magnetisation self-inductions are no longer important. The leakage self-inductance of the current transformer only results in a higher voltage drop on the primary side and not in an error in the current distribution control. The magnetisation current of the current transformers will make the secondary current somewhat less than 1/100 part of the primary current, but in the same way for the local current and the total current, causing no error for the current distribution control.

If a source is uncontrollable and has, moreover, an appreciable lower source impedance than the rest of the system of coacting sources, as is the case, for example, for the public mains, it is not necessary to incorporate a current transformer in it and in this case, it is possible to make do with the (virtual) short-circuiting of the auxiliary switching conductor.

All the sources then measure only their own current and will make it zero, with the result that actual isolation of the sources from the parallel system is unnecessary.

If the auxiliary switching conductor is not completely short-circuited, all the sources will continue to take a small part of the total load current on their own account.

If it is desired to split up the system of alternating-voltage sources into, for example, two subsystems, each consisting of a number of sources and the loads associated therewith, it is possible to make do with isolating the auxiliary switching conductor at the same point as the main parallel rail. The switch S4 is provided for this purpose.

For each subsystem proportional load distribution over the source always remains possible.

## Claims

1. Circuit for measuring the current distribution in the case of parallel-operating alternating-voltage sources, in which each alternating-voltage source is provided, in at least one phase, with a current transformer and a first resistor connected to an output terminal thereof, characterised in that the other connecting terminal of the first resistor is connected to a circuit point which is common for all the alternating-voltage sources and in that the output terminals, not connected to the first resistor, of the current transformers of the alternating-voltage sources are connected to one another and to one side of a parallel circuit of a number of second resistors, which number corresponds to the number of parallel-operating alternating-voltage sources, the current delivered by an alternating-voltage source being fed in each case to the input of the current transformer associated therewith and the sum of the terminal voltages of said current transformer with respect to the common circuit point being a measure of the current, delivered by the alternating-voltage source associated therewith, which is more or less than a predetermined share of the total load current.

2. Circuit according to Claim 1, characterised in that the values of the second resistors are inversely proportional to the type powers of the sources.

3. Circuit according to Claim 2, characterised in that the first and second resistors in each alternating-voltage source are equal to one another.

4. Circuit according to Claim 1, 2 or 3, characterised in that the output terminal, connected to the first resistor, of the current transformer is connected to the input of an amplifier via a third resistor and the output terminal connected to the second resistor is connected to the said input via a fourth resistor.

5. Circuit according to Claim 4, characterised in that the amplifier is an isolating amplifier.

6. Circuit according to Claims 2, 4 or 5, characterised in that the ratio of the values of the first and second resistors is equal to the ratio of the values of the third and the fourth resistors.

7. Circuit according to any of the preceding claims, characterised in that the output terminals, to be connected to one another, of the current transformers are connected via an auxiliary switching conductor which is short-circuited if one of the alternating-voltage sources has a very low source impedance and is uncontrollable.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US-A-2 590 023 (E. LEWIS ET AL.)<br>* column 5, line 74 - column 7, line 9; figures 3,4 *<br>--- | 1 | H02J3/46 |
| A | FR-A-857 212 (UNION D'ELECTRICITE ET  C. D. C)<br>* page 1, line 1 - line 21 *<br>* page 2, line 18 - line 92; figure 1 *<br>--- | 1 | |
| A,0 | EP-A-0 014 415 (SIEMENS AKTIENGESELLSCHAFT)<br><br>----- | 1 | |

TECHNICAL FIELDS
SEARCHED (Int. Cl.5)

H02J

The present search report has been drawn up for all claims

| Place of search | Date of completion of the search | Examiner |
|---|---|---|
| THE HAGUE | 02 SEPTEMBER 1992 | HELOT H.V. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P0401)